# EUROPÄISCHE PATENTSCHRIFT

(11) **EP 2 742 368 B1**
(45) Veröffentlichungstag und Bekanntmachung des Hinweises auf die Patenterteilung: **04.12.2019**
(21) Anmeldenummer: 12753394.1
(22) Anmeldetag: 03.08.2012
(51) Int. Cl.: G01V 3/10

(54) **SENSOR ZUR ORTUNG METALLISCHER OBJEKTE**
SENSOR FOR LOCATING METAL OBJECTS
CAPTEUR PERMETTANT DE LOCALISER DES OBJETS MÉTALLIQUES

(30) Priorität: 10.08.2011 DE 102011109870; 24.01.2012 DE 102012001202
(43) Veröffentlichungstag der Anmeldung: 18.06.2014
(73) Patentinhaber: Reime, Gerd, 77815 Bühl (DE)
(72) Erfinder: Reime, Gerd, 77815 Bühl (DE)
(74) Vertreter: Reinhardt, Harry
(86) Internationale Anmeldenummer: PCT/EP2012/003323
(87) Internationale Veröffentlichungsnummer: WO 2013/020686

(56) Entgegenhaltungen:
- WO-A1-2010/133328
- US-A- 4 255 711
- US-A- 6 144 206
- US-A1- 2010 181 995

## Beschreibung

Die Erfindung betrifft einen Sensor zur Ortung metallischer Objekte nach dem Oberbegriff des Anspruches 1.

Metalldetektoren arbeiten nach verschiedenen Prinzipien. Bei einigen Ausführungen wird nur eine Spule verwendet, die z.B. Teil eines Oszillators ist. Bei Metallannäherung ändert sich die Spannung am Schwingkreis des Oszillators. Diese Veränderung der Spannung wird dann entsprechend ausgewertet und zur Bestimmung des Metalls verwendet.

Andere Messprinzipien senden mit einer Spule einen elektromagnetischen Puls aus, der in dem zu detektierenden Metallteil einen Wirbelstrom erzeugt. Dieser Wirbelstrom wird in der Regel mit einer zweiten Spule empfangen und entsprechend ausgewertet.

Gemäß einem anderen Verfahren wird mit einer Sendespule ein kontinuierliches Wechselfeld ausgesendet, das mit einer zweiten Spule empfangen wird. Diese zweite Spule ist so gegenüber der ersten Sendespule angeordnet, dass sich ohne den Metalleinfluss eines zu detektierenden Objekts die magnetische Wirkung der Sendespule in der Empfangsspule aufhebt. Die mechanische Anordnung der Sende- und Empfangsspule muss sehr stabil gewählt werden, da jede kleine Verschiebung oder Verformung sofort zu einem Ausgangssignal in der Empfangsspule führt.

Eine dem Oberbegriff der unabhängigen Ansprüche zu Grunde liegende, in der WO 2010/133328 A1 gezeigte Anordnung verwendet in einem weiteren Verfahren zwei gegeneinander versetzte Sendespulen und regelt mit den Stromanteilen ein Empfangssignal ständig, also auch mit oder ohne Metall, zu "Null". In diesem System haben Temperatureinflüsse auf die Empfangsspule und den Vorverstärker keine Einflüsse auf den gemessenen Detektionswert. Der Detektionswert wird aus dem Verhältnis der geregelten Sendeströme abgeleitet, so dass auch bei nahezu gleichen Sendeströmen eine Beeinflussung des Detektionswerts durch Temperatureinfluss auf die Sendespulen ausgeschlossen werden kann. Mechanische Verformungen der Spulenanordnungen führen lediglich zu einem "Offset" im Detektionswert, da das Empfangssignal weiterhin "Null" bleibt.

Dabei wird eine Spulenanordnung eingesetzt, bei der sich das oder die Magnetfelder der Sendespule/n in der oder den Empfangsspulen aufheben. Nur der vom zu detektierenden Metallgegenstand ausgehende Anteil wird gemessen. Dazu werden die Spulen so überlappt angeordnet, dass sich ohne Metalleinfluss das ausgesendete Magnetfeld in der Empfangsspule aufhebt. Die Überlappung der Spulen zueinander beträgt nur einen geringen Teil der Spulenfläche. Dieser Teil ist für die Detektion der empfindlichste Bereich. Der größte Teil der Spulenflächen überlappt sich jedoch nicht, und das führt daher zu großen Spulensystemen mit nur kleinem empfindlichen Bereich, der in der Regel auch noch zum gesamten Spulensystem unsymmetrisch ist.

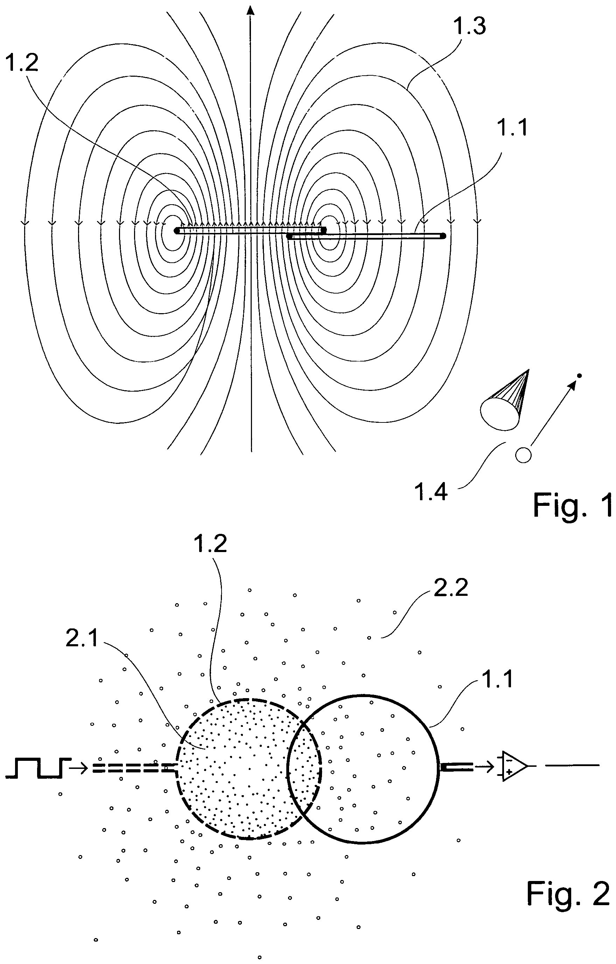

Bei sogenannten "Schatz- oder Minensuchgeräten", wie aus der DE 43 39 419 C2 bekannt, wird häufig eine Spulenanordnung in einer Doppel-D Anordnung eingesetzt. Sendespule und Empfangsspule überlagern sich teilweise so, dass der Wechselinduktionskoeffizient minimal ist. Die Spulen werden wechselweise als Sende- und Empfangsspule betrieben. Dabei sind die beiden "D" spiegelbildlich und überlappend angeordnet. Warum sich nur ein kleiner Teil der Spulen überlappen darf, geht aus Fig. 1 hervor. Sie zeigt eine Spulenanordnung von der Seite. Die Feldlinien 1.3, die von einer Sendespule 1.2 ausgehen, sind im Mittelpunkt der Spule stärker konzentriert als im den die Spule umgebenden Außenbereich. Da die Empfangsspule 1.1 von einer gleich großen Zahl Feldlinien im Innen- und im Außenbereich der Sendespule durchflutet werden muss, ergibt sich zwangsläufig die Anordnung in Fig. 1.

Ein im Pulsinduktionsverfahren(PI-)Modus betriebener Metalldetektor ist aus der DE 103 01 951 A9 bekannt. Die Wechselwirkung der primären und sekundären Spulen wird durch teilweise Überlappung der co-planaren Spulensysteme entkoppelt. Eine Einstellung der Entkopplung erfolgt mittels mechanisch verschiebbarer Massen im Bereich der Überlappung oder durch elektrische Kompensationshilfsmittel z.B. in der Form zusätzlicher Kompensationssignale vom Generator in den Empfangskreis. Sie kompensieren den nicht vollständig entkoppelten Anteil der Sendeenergie in die Empfangsspule. Eine "Rückkoppelung" zwischen detektiertem Signal der Empfangsspule und Kompensationswirkung, also eine geschlossene Regelung, liegt nicht vor.

Aus der DE 103 18 350 B3 ist eine vergleichbare Anordnung bekannt, bei der mehrere Spulen hinsichtlich ihres magnetischen Wechselfelds überlappend, benachbart versetzt zueinander geschachtelt sind. Eine größte Spule vorzugsweise die Empfangsspule bestimmt die Peripherie der Spulenanordnung.

Aus der DE 36 19 308 C1 ist eine Umkehrung des oben genannten Prinzips, d.h., eine umliegende Sendespule mit zwei als "Acht" ausgebildeten Empfangsspulen, in denen gegenseitig das ausgesandte Feld ausgelöscht wird.

Aus der DE 10 2010 005 399 A1 ist an einem Positionssensor oder genauer einem Kurbelwinkelsensor, der den Winkel der Kurbelwelle an einem Fahrzeugmotor misst, die Verwendung von gegeneinander drehbaren Mäandern und Spulen. Das Mäandern wird dort, Absatz (0029) so erläutert, dass die Spule ein "Mäander Zickzack Spulenmuster" ausbildet, dass in einer rechteckigen Form mäandert. Dadurch bilden sich rechteckige Abschnitte, die jeweils in Richtung zum Außenrand der Regelleiterplatte vorstehen und Verbindungsabschnitte aufweisen, die jeweils benachbarte rechteckige Abschnitte verbinden. Werden die Spulen zueinander mit der Geschwindigkeit der Kurbelwelle des Fahrzeugmotors gedreht, ergibt sich eine periodische Schwankung, die in den verschiedenen Ausführungsformen erfasst werden kann, um eine exakte Motorsteuerung zu ermöglichen. Dadurch ergibt sich eine relativ große induzierte elektrische Leistung, jedoch wird dies nur zur Vereinfachung des Drehgebers genutzt.

Die DE 10 2004 047 189 A1 betrifft einen Balkensensor oder Stud Finder, der dazu bestimmt ist beispielsweise in Bauwerkstoffen verborgene metallische Objekte zu orten. Hierbei kann es sich um Bewehrungsstäbe oder Leitungen und Rohre handeln, die hinter einer Wand verdeckt sind. Um die Offset-Probleme des Standes der Technik zu verringern, die durch die sonst üblichen Spulentoleranzen auftreten, werden Leiterschleifensysteme durch Leiterstrukturen auf einer Leiterplatte ausgebildet. Sendespulen, Kompensations- und Empfangsleiterschleifen sind zueinander höhenversetzt auf den Leiterplatten angeordnet.

Die ebenfalls auf einen Stud Finder gerichtete DE 10 2004 047 188 A1 zielt auf die Änderung der effektiven Windungszahl eines Empfangswindungssystems unter Einsatz von Schaltmitteln ab, um durch alternative Mittel die Empfindlichkeit zu steigern. Die Lösung ist weitestgehend ähnlich zur DE 10 2004 047 189 A1 aufgebaut.

Die DE 10 2009 042 940 A1 betrifft eine Positionsmesseinrichtung, die gemäß den Figuren 3, 4 mit mäandernden Leiterbahnen arbeitet. Die Leiterbahnen einer ersten Gruppe von schlangenförmigen Leiterbahnen und die Leiterbahnen einer zweiten Gruppe von schlangenförmigen Leiterbahnen sind über eine Durchkontaktierung elektrisch leitend miteinander verbunden sind. Dadurch ergeben sich Kreuzungsstellen der sich selbst kreuzenden Senderleiterbahnen, es erfolgt also keine Überlagerung einer Senderspule mit einer Empfangsspule.

Die WO 02/091021 A1 versucht bei einem Stud Finder ein möglichst geringes Offset-Signal zu erreichen, indem Sendespule und Empfangsspule induktiv gekoppelt werden und bei konzentrischer Anordnung so hinsichtlich Windungszahl und Abmessungen dimensioniert werden oder die Sendeströme hinsichtlich Phasenlage und Amplitude so bemessen werden, dass eine gegenseitige Kompensierung stattfindet. Mit anderen Worten soll erreicht werden, dass ohne die Nähe eines Gegenstandes sich möglichst kein Signal ausbildet, sodass bei der Ortung eines Gegenstandes sich ein eindeutiges Signal ergibt.

Die DE 197 38 841 A1 zeigt periodische mäanderförmige, dreieckförmige Strukturen bei einem induktiven Winkelsensor, um eine detektierbare Änderung bei Verstellung des Winkels zu erreichen.

Die US 5,804,963 A1 zeigt das grundsätzliche Prinzip der Verwendung von mäandernden Strukturen, um dadurch bei einem Positionssensor periodisch sich ändernde elektromagnetische Änderungen einzuführen, die bei einem Positionssensor dazu beitragen, Änderungen messbar zu machen. Die Mäander werden allerdings nur teilweise vorgesehen und sind über die genannte Messgrößenverfeinerung nicht dazu bestimmt, die Reichweite zu erhöhen.

Dass der Begriff "Feldlinien" nicht wörtlich zu nehmen ist, ist jedem Fachmann bekannt, da sie in etwa nur Bereiche gleicher magnetischer Stärke und Polung leichter veranschaulichen. Daher wird in der weiteren Beschreibung der Erfindung diese Darstellung zur Darstellung der magnetischen Dichte verwendet. Spulen werden der besseren Darstellbarkeit mit nur einer Windung dargestellt. Die Erfindung geht selbstverständlich von Spulen mit mehreren Windungen aus, bzw. von "gedruckten" Spulen auf einer Platine. In den Spulen wirkt ein Wechselsignal; die Darstellung der Feldlinien wird nur während einer Taktphase dargestellt.

Ausgehend von diesem Stand der Technik liegt der vorliegenden Erfindung die Aufgabe zu Grunde, einen Sensor zur Ortung metallischer Objekte bzw. eine Spule zu schaffen, der bzw. die eine höhere Reichweite des Sensors bzw. erweiterte Einbaumöglichkeiten in übliche Industriesensorgehäuse bietet.

Diese Aufgabe wird durch einen Sensor mit den Merkmalen des Anspruches 1 gelöst.

Durch den Sensor mit einem Spulensystem wird für Metalldetektoren oder Annäherungssensoren eine verbesserte Reichweite erreicht, indem die Größe der überlappenden Bereiche zwischen Sendespule(n) und Empfangsspule(n) und somit auch die Detektionsempfindlichkeit bei gleichzeitig rotationssymmetrischen Detektionseigenschaften deutlich vergrößert wird. Der Empfindlichkeitsbereich ist bei geringer Außenrandempfindlichkeit nahezu rotationssymmetrisch und weist keinen Nahfeldfehler auf. Unter einem Spulensystem mit rotationssymmetrischen Detektionseigenschaften wird dabei ein Spulensystem verstanden, bei dem unabhängig davon, in welcher Richtung ein metallischer Gegenstand mit gleich bleibendem Abstand über das Spulensystem geführt wird, sich nahezu deckungsgleiche Kurven der dabei auftretenden Ausgangsspannung ergeben. Das Spulensystem nimmt also den Gegenstand, gleichgültig aus welcher Richtung er kommt, nahezu gleich wahr. Dazu werden mäandernde Schleifenabschnitte der Windungen von Sende- und Empfangsspule ausgebildet. Unter mäandernden Schleifenabschnitten eines Leiters, der eine Windung einer Spule bildet, wird dabei verstanden, dass ein Leiter, der entlang seiner Längsrichtung vorzugsweise in gleicher Breite hin und her wandert, sprich mäandert, in Spulenform gebracht ist, d.h. der Mäander wird sozusagen wie bei einer Spule gebogen. Hieraus bilden sich dann die Schleifenabschnitte einer Windung der Spule so aus, dass die Schleifenabschnitte aus vorzugsweise kreisförmigen Abschnitten bestehen, die mit unterschiedlichem radialen Abstand zum Mittelpunkt einer vorzugsweise kreisförmigen Spule angeordnet sind und unter Bildung eines elektrischen Leiters über vorzugsweise radial angeordnete Abschnitte abwechselnd miteinander verbunden sind. So ergeben sich wechselweise in Richtung auf den Mittelpunkt der Spule oder nach außen hin offene oder geschlossene Abschnitte der mäanderförmigen Windung der Spule, was zu der gewünschten Steigerung der sich überlappenden Bereiche führt.

Die Sende- und Empfangsspule können zur Wechselwirkungsentkopplung verdreht und/oder versetzt vorzugsweise so zueinander angeordnet werden, dass sich innerhalb der nach innen offenen, entlang des Umfangs der Spule mäandernden Schleifenabschnitte der Empfangsspule Feldlinien eines zu den von der Bestromung der Sendespule hervorgerufenen Feldlinien invertierten Felds ausbilden, während sich im Innern der Empfangsspule ein mit den Feldlinien der Sendespule gleichsinniges Feld ausbildet, das damit die Wirkung der Sendespule unterstützt und die Reichweite vergrößert.

Weitere Vorteile ergeben sich aus den Unteransprüchen und der nachfolgenden Beschreibung bevorzugter Ausführungsbeispiele.

### Kurzbeschreibung der Figuren

Im Folgenden wird die Erfindung an Hand von in den Figuren dargestellten Ausführungsbeispielen näher erläutert. Es zeigen:
- Fig. 1: eine Darstellung der Magnetfeldlinien einer Sendespule,
- Fig. 2: eine Draufsicht auf das Spulensystem gemäß Fig. 1,
- Fig. 3: die Feldlinien um einen geraden Strom durchflossenen Leiter,
- Fig. 4: die Feldlinien um einen mäanderförmigen Strom durchflossenen Leiter,
- Fig. 5: eine Windung einer erfindungsgemäßen mäanderförmigen Sendespule,
- Fig. 6: die dazu entstehenden Feldlinien der Sendespule,
- Fig. 7: die Empfangsspule mit den zugehörigen Feldlinien,
- Fig. 8: ein Spulensystem mit Sendespule und Empfangsspule,
- Fig. 9: die bei Verdrehung gegenüber der Sendespule entstehende Spannung an der Empfangsspule bei einem getakteten Sendestrom in der Sendespule über dem Verdrehwinkel,
- Fig. 10: eine Spulenanordnung in einem erfindungsgemäßen Ausführungsbeispiel mit zwei um einen kleinen Winkelbereich unterschiedlichen Sendespulen,
- Fig. 11: die Wirkungsweise der Anordnung gemäß Fig. 10 an Hand einer Ausgangsspannung der Empfangsspule bei Verschieben der Bestromung von einer Sendespule zur anderen,
- Fig. 12, 13: die Detektionsempfindlichkeit einer Spulenanordnung nach dem klassischen "Doppel-D" Prinzip und einer Spulenanordnung gemäß Fig.8,
- Fig. 14: ein in eine metallische Umgebung eingebundenes Spulensystem und
- Fig. 15: die erfindungsgemäße Spulenanordnung mit einer mittigen Öffnung für eine Rohrleitung.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Für die im Folgenden verwendete Darstellung der Feldlinien zeigt 1.4 in Fig. 1 symbolisch die Richtung der Feldlinien in der Draufsicht des Spulensystems. Punkte symbolisieren demnach auf den Betrachter zulaufende Feldlinien, während Kreise die vom Betrachter weglaufenden Feldlinien darstellen.

Fig. 1 zeigt eine bekannte Spulenanordnung mit sich überlappender Sendespule 1.2 und Empfangsspule 1.1 von der Seite. Feldlinien 1.3, die von der Sendespule 1.2 ausgehen, sind im Mittelpunkt der Spule stärker konzentriert als in dem die Spule umgebenden Außenbereich. Da die Empfangsspule 1.1 zur Wechselwirkungsentkopplung von einer gleich großen Zahl Feldlinien im Innen- und im Außenbereich der Sendespule durchflutet werden muss, ergibt sich zwangsläufig die Anordnung in Fig. 1. Fig. 2 zeigt die Wirkung des bekannten Spulensystems gemäß Fig. 1, bei dem die Sendespule 1.2 ein Feld aussendet. Die auf den Betrachter zulaufenden Feldlinien 2.1 konzentrieren sich innerhalb der Sendespule 1.2, die weglaufenden Feldlinien 2.2 verteilen sich in einem größeren Bereich um die Spule herum. Um mit der Empfangsspule 1.1 ein "Null"-Signal zu erreichen, muss sie so angeordnet werden, das in etwa die gleiche Anzahl "punktförmiger" Feldlinien sowie "kreisförmiger" Feldlinien die Spule durchdringen. Somit hebt sich die Wirkung des Magnetfeldes in der Spule auf und sie wird ausschließlich die vom zu detektierenden Gegenstand ausgehenden, durch die Sendespule 1.2 angeregten magnetischen Felder empfangen. Dies ist am wirksamsten in dem Bereich, in dem sich die Spulen überlappen.

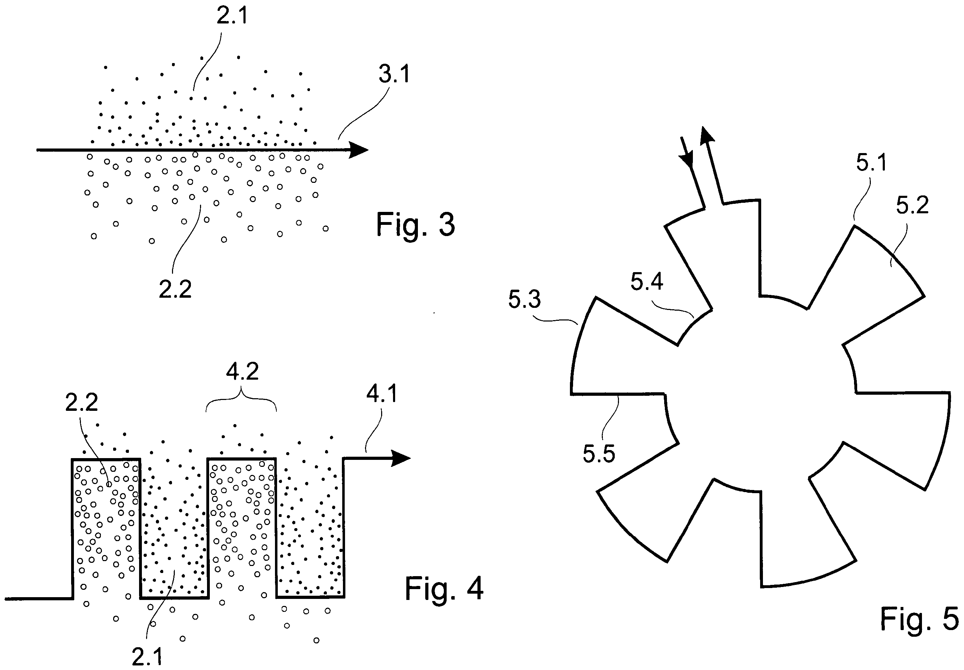

Um die Effektivität eines Spulensystems deutlich zu erhöhen, wurde von folgender Überlegung ausgegangen: ein gerader Strom durchflossener Leiter 3.1 bildet gemäß Fig. 3 um sich herum Feldlinien, deren Anzahl mit der Entfernung vom Leiter abnimmt. Fig. 4 zeigt dagegen die Feldlinien um einen mäanderförmigen Strom durchflossenen Leiter 4.1. Die Feldlinien konzentrieren sich hauptsächlich innerhalb der "Spulenabschnitte" 4.2, die aus je einer halben Windung des Mäanders bestehen.

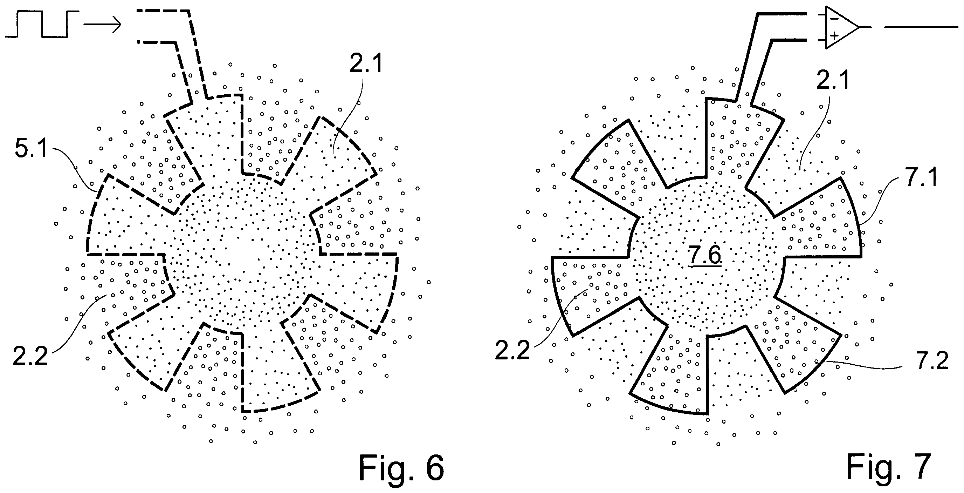

Um diesen Effekt in einer mehrwindigen Spule zu nutzen, wird der mäanderförmige Leiter in Spulenform gebracht, d.h. der Mäander wird sozusagen wie bei einer Spule gebogen. In Fig. 5 wird daraus nur eine mäanderförmige Windung der Spule, einer Sendespule 5.1 dargestellt, wobei die Empfangsspule 7.1 gemäß Fig. 7 im Wesentlichen eine identische Spulenform aufweist.

Mit diesen Spulen wird ein Sensor zur Ortung metallischer Objekte mit Spulen bzw. Spulenteilen gebildet, die zwei Sendespulen 5.1, 5.7 und wenigstens eine Empfangsspule 7.1 ausbilden, welche induktiv miteinander gekoppelt und zur Wechselwirkungsentkopplung teilweise überlappend angeordnet sind, wobei eine optimale Auslöschung der Wechselwirkung erreichbar ist.

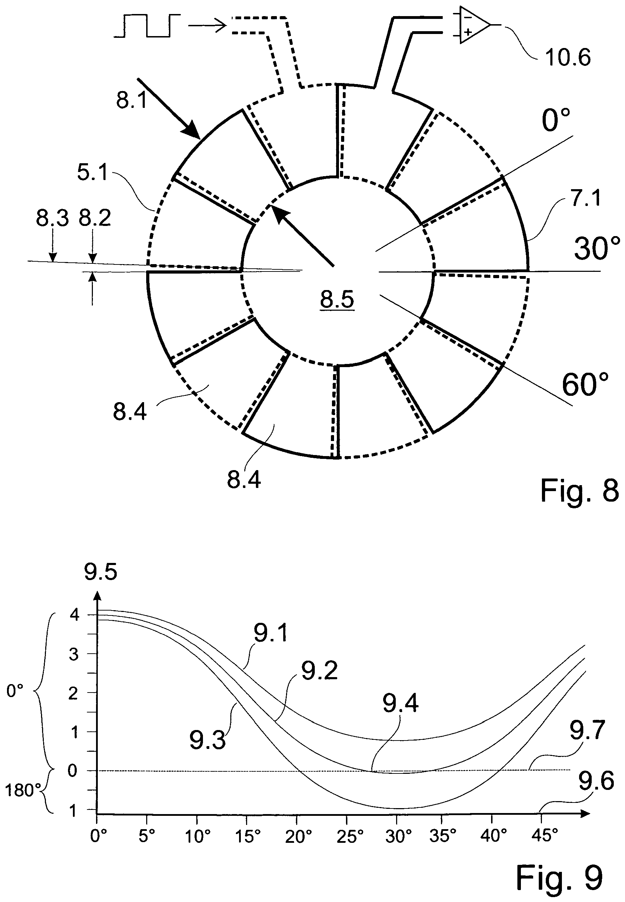

Eine Sensorelektronik ist zur Bestromung der Sendespule und zur Auswertung eines Empfangssignals 10.6 der Empfangsspule vorgesehen. Sendespule 5.1 und Empfangsspule 7.1 sind gemäß Fig.8 zueinander verdreht und/oder versetzt angeordnet sind, wobei sich mehrere symmetrisch angeordnete, überlappende Bereiche 8.4 ausbilden. Diese überlappenden Bereiche 8.4 sind vorzugsweise punktsymmetrisch zur Mitte der Spulen angeordnet sind.

Gemäß Fig. 5 und 7 weist die Spulenform entlang des Umfangs der ebenen Spule bzw. Spulenteile angeordnete, mäandernde Schleifenabschnitte 5.2, 7.2 auf. Die vorzugsweise kreisförmige Spule weist n Schleifenabschnitte 5.2, 7.2 mit n z.B. ≥ 6 auf, wobei die Schleifenabschnitte von Sendespule 5.1 und Empfangsspule 7.1 um einen Winkel von etwa 360°/ (n ^{∗} 2) verdreht angeordnet sind. Dies bedeutet dass sich bei n = 6 ein Verdrehwinkel von etwa 360° / (6 ^{∗} 2) ≈ 30°, was etwa der Winkelhalbierenden des Winkels von 60°des jeweiligen Schleifenabschnitts bei sechs Schleifenabschnitten entspricht. Warum nur ungefähr 30°, wird im Folgenden noch erläutert.

Die Schleifenabschnitte 5.2, 7.2 bauen sich aus vorzugsweise kreisförmigen Abschnitten 5.3, 5.4 auf, die mit unterschiedlichem radialen Abstand zum Mittelpunkt der kreisförmigen Spule angeordnet sind und unter Bildung eines elektrischen Leiters über vorzugsweise radial angeordnete Abschnitte 5.5 abwechselnd miteinander verbunden sind. So ergeben sich wechselweise in Richtung auf den Mittelpunkt der Spule oder nach außen hin offene oder geschlossene Abschnitte der mäanderförmigen Windung der Spule. Andere Formen als kreisförmige oder radial angeordnete Abschnitte sind denkbar. So können z.B. die Abschnitte 5.3, 5.4 auch geradlinig sein oder die Abschnitte 5.5 nicht radial zur Mitte verlaufen. Wesentlich ist die Bildung der Schleifenabschnitte 5.2, 7.2.

Fig. 6 zeigt die zugehörigen, dabei entstehenden Feldlinien der Sendespule 5.1, wenn ein Strom durch diese Spule fließt. Für den weiteren Verlauf der Darstellung der Erfindung werden die Sendespule/n zur Unterscheidung von den Empfangsspulen jeweils gestrichelt dargestellt.

Die Anzahl n der Mäander bzw. Schleifenabschnitte 5.2, 7.2 ist beliebig und richtet sich nach der verwendeten Spulenausführung. Je höher die Anzahl ist, umso rotationssymmetrischer wird sich die Spule verhalten. In der Praxis hat sich eine Anzahl von sechs bis zehn mäandernden Schleifenabschnitten auf dem Kreisumfang, so wie in Fig. 5 dargestellt, z.B. für eine gedruckte Spule als allgemein ausreichend erwiesen. Die weitere Beschreibung geschieht auf Basis einer Spule mit sechs Schleifenabschnitten.

Die Empfangsspule 7.1 kann im Wesentlichen gleich der Sendespule 5.1 aufgebaut sein. Sie wird mit "etwa" 30 Grad Versatz deckungsgleich auf (oder unter) der Sendespule angebracht. Dadurch "empfängt" sie gleich viele Feldlinien der unterschiedlichen Richtung, so dass die Sendespule keine induktive Wirkung auf die Empfangsspule ausübt. Ein metallischer Gegenstand vor diesem Spulensystem wird von der Sendespule 5.1 angeregt, während die im Mittelpunkt zu einem großen Teil deckungsgleichen Empfangsspulenbereiche das vom Metallgegenstand ausgesendete Feld ungestört empfangen. Innerhalb der nach innen offenen Schleifenabschnitte 7.2 der Empfangsspule 7.1 entstehen Feldlinien eines zu den von der Bestromung der Sendespule hervorgerufenen Feldlinien invertierten Felds, während sich im Innern 7.6 der Empfangsspule ein mit den Feldlinien der Sendespule gleichsinniges Feld ausbildet, das die Funktion und damit die Reichweite der Sendespule unterstützt.

Fig. 8 zeigt ein Spulensystem mit der Sendespule 5.1 und der Empfangsspule 7.1. Beide Spulen haben einen Winkelversatz von fast 30°.

Im Stand der Technik - "Doppel-D" wird die Auslöschung der induktiven Wirkung der Sendespule auf die Empfangsspule durch Verschieben der Spulen zueinander erreicht. Erfindungsgemäß hingegen geschieht die für diese Auslöschung erforderliche Einstellung meist nur beim Kalibrieren des Spulensystems durch Verändern der Tiefe 8.1 der Mäander, d.h. durch Verändern des radialen Abstands der Abschnitte 5.3, 5.4 oder bei festgelegter Tiefe durch Verdrehung des Spulenwinkels 8.3 zwischen Sendespule 5.1 und Empfangsspule 7.1.

Fig. 9 zeigt die bei der Verdrehung entstehende Spannung 9.5 an der Empfangsspule bei einem getakteten Sendestrom in der Sendespule 5.1. (Die Spannungswerte sind nur Beispielswerte). Angefangen bei 0 Grad ergibt sich nur eine Erfassung der Feldlinien 2.1, die im Innenbereich der Sendespule 5.1 entstehen. Bei 30 Grad Verdrehung werden zusätzlich die invertierten äußeren Feldlinien 2.2 erfasst, während die Erfassung der Feldlinien 2.1 entsprechend abnimmt. Eine optimale Anordnung der Spulen ist gegeben, wenn sich genau bei 30 °oder bereits bei einen kleinen Winkelbereich 8.2 vor Erreichen des 30° Versatzes zwischen Sende- und Empfangsspule das Sendesignal in der Empfangsspule 7.1 auslöscht, sich also ein "Null"-Wert ergibt. Die dazu gehörige Kurve 9.2 zeigt eine Unterschreitung des "Null"-Wertes an der Position 9.4, also einen kleinen Winkelbereich 8.2 (Fig.8) vor Erreichen der 30°. Die dazu gehörige Position der Sendespule ist mit 8.3 bezeichnet. Auf sie wird später noch zurückgegriffen. In der Position, welche dem Verlauf der Kurve 9.4 entspricht, löschen sich also die Magnetfelder der Sendespule 5.1 in der Empfangsspule 7.1 vollständig aus. Die Größe des Winkelbereichs 8.2 kann durch die radiale Tiefe 8.1 (Fig.8) der mäandernden Schleifenabschnitte 5.2, 7.2 bestimmt werden.

Bei einer zu kleinen Tiefe 8.1 der mäandernden Schleifenabschnitte fällt bei der Verdrehung um den Winkelgrad 9.6 die Spannung ab, bis sie bei 30 Grad ein Minimum erreicht hat, um dann wieder anzusteigen. Dies verdeutlicht die Kurve 9.1. Im Minimum bei 30 Grad wird dabei jedoch noch keine Auslöschung erreicht. Das heißt, die Schleifenabschnitte sind zu klein. Bei einer zu großen Tiefe der mäandernden Schleifenabschnitte wird dagegen eine Auslöschung des Sendesignals in der Empfangsspule 7.1 deutlich vor Erreichen der 30 Grad eintreten. Ein Weiterdrehen erzeugt dann ein invertiertes Signal, das sein Maximum bei 30 ° Winkelversatz aufweist. Das heißt, die Schleifenabschnitte sind zu groß. Auch ein solches Spulensystem kann in der Praxis eingesetzt werden, jedoch verringert sich dabei der durch beide Spulen gemeinsam genutzte "Überlappungsbereich", bzw. die effektive Sende- bzw. Empfangsfläche.

In dieser Anordnung mit fest eingestellten Spulenwinkel 8.3 können mechanische Einflüsse, wie z.B. eine Verformung des Spulensystems oder auch ein Metalleinfluss zu einer Verschiebung des Punktes 9.4 der optimalen Auslöschung führen.

Darum wurde in den WO 2010/084000 A1 und WO 2010/133328 A1 vorgeschlagen, mit zwei Sendespulen und jeweils geregelten Spulenströmen zu arbeiten, um immer ein perfektes "Null"-Signal zu erhalten. Die weitere Beschreibung der Erfindung bezieht sich auf oben genannten Patentanmeldungen. Für die vorliegende Erfindung ist insbesondere wesentlich, dass sich durch die Wechselwirkung von Sendespulen und wenigstens einer Empfangsspule ein örtlicher Punkt optimaler Auslöschung der von den Sendespulen ausgesandten Felder in den Empfangsspulen ergibt. Die Spulen sind dabei so angeordnet, dass die Sendespulenteile bei gleicher Bestromung eine Wirkung auf die wenigstens eine Empfangsspule ausüben, bei der ein örtlicher Punkt der optimalen Auslöschung der ausgesandten Felder in den Empfangsspulen entsteht. Dieser Punkt verschiebt bzw. bewegt sich jedoch bei hauptsächlicher bis alleiniger Bestromung einer ersten Sendespule oder eines ersten Teils der Sendespule in eine erste Richtung, während er sich bei hauptsächlicher bis alleiniger Bestromung einer weiteren Sendespule oder eines weiteren Teils der Sendespule in eine weitere, vorzugsweise der ersten Richtung entgegengesetzten Richtung verschiebt bzw. bewegt. Dieser örtliche Punkt der optimalen Auslöschung wird durch eine Metallannäherung beeinflusst. Eine Regelschaltung zur Regelung der Ströme der Sendespulenteile führt im Regelungsfall zu einer Verschiebung des örtlichen Punktes der optimalen Auslöschung, die eine Auslöschung des Empfangssignals bewirkt. Der dafür erforderliche Regelwert bzw. seine Änderung wird vorzugsweise als Maß für eine Metallannäherung oder eine Ortung metallischer Objekte verwendet.

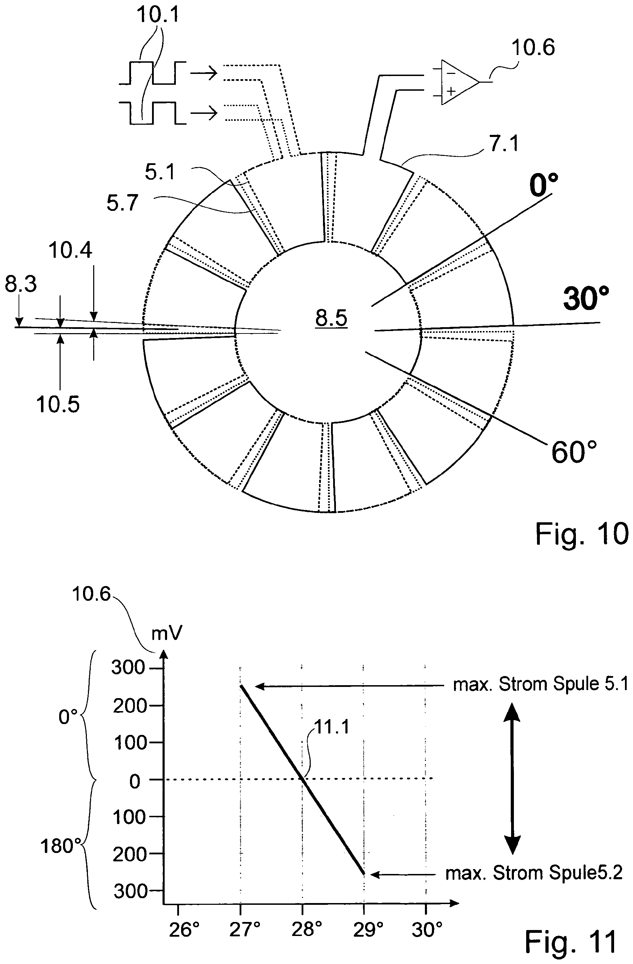

Um mit zwei geregelten Sendeströmen das Empfangssignal in der Empfangsspule auszulöschen, werden zwei um einen kleinen Bereich im Winkel unterschiedliche Sendespulen 5.1 und 5.7 mit geregelten Spulenströmen eingesetzt. Fig. 10 zeigt eine derartige Spulenanordnung. Die Sendespule 5.1 hat einen kleinen Winkelversatz 10.4 in Richtung "vor" dem Spulenwinkel 8.3 der optimalen Auslöschung bei einer Einzelspule, die weitere Sendespule 5.7 einen kleinen Winkelversatz 10.5 "nach" dem Winkel der optimalen Auslöschung. Die Winkelversätze können in der Praxis kleiner sein als in Fig. 10 dargestellt, sie liegen z. B. im Bereich von 0.2 Grad.

Die Spulen sind so gepolt, das die Feldlinien in jeder Taktphase 10.1 in gleiche Richtung zeigen. Bei gleichem Strom in beiden Sendespulen 5.1 und 5.7 ist die Wirkung beider Sendespulen zusammen gleich der Wirkung der Einzelspule im Ausführungsbeispiel der Fig. 5. Es ergibt sich also eine Auslöschung der gesendeten Magnetfelder in der Empfangsspule.

Fig. 11 zeigt die Wirkungsweise an Hand einer möglichen Ausgangsspannung 10.6 der Empfangsspule 7.1 bei Verschieben der Bestromung von der Spule 5.1 hin zur Spule 5.7. Dabei sollen die Sendespule 5.1 bei 27° und die Sendespule 5.7 bei 29° angeordnet sein. Wird nur die Sendespule 5.1 bestromt, ergibt sich z.B. eine Ausgangsspannung von 250mV mit zur Sendepolarität gleicher Phase. Eine Regelung des Stromes der Sendespule 5.1 hin zu kleineren Werten und des Stroms der Sendespule 5.7 hin zu größeren Werten verändert die Ausgangspannung 10.6 bis der Punkt 11.1 erreicht wird, also der Auslöschung der gesendeten Magnetfelder in der Empfangsspule 7.1. Das Ausgangssignal 10.6 wird zu einem "Null"-Signal. In den WO 2010/084000 A1 und die WO 2010/133328 A1 sind alle weiteren Maßnahmen zur ständigen Regelung der Sendeströme zur kontinuierlichen Beibehaltung eines "Null" Signals ausführlich beschrieben.

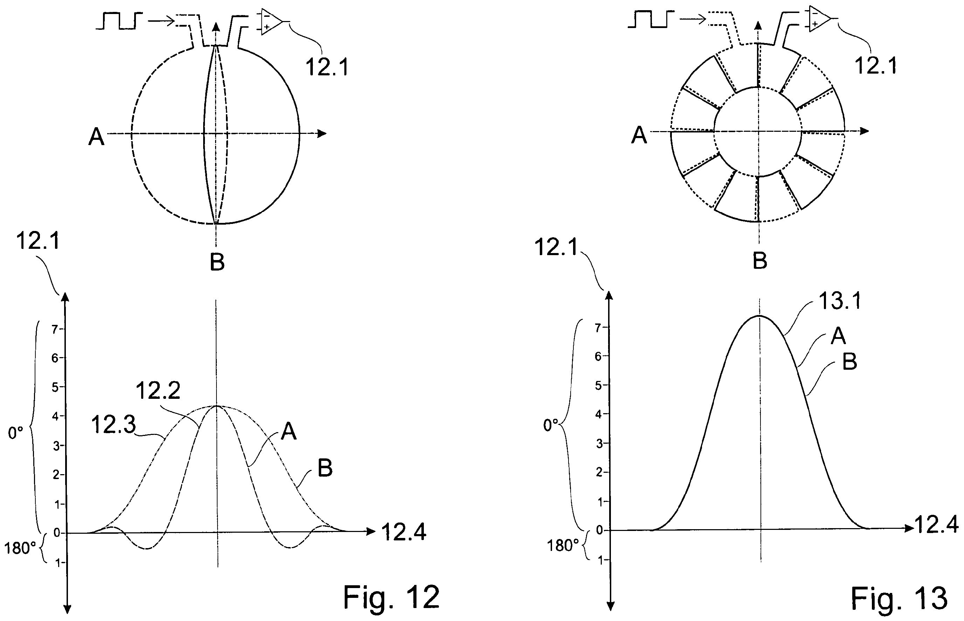

Ein weiterer Vorteil der hier beschrieben Spulenanordnung, egal ob mit einer oder zwei Sendespulen, ist in Fig. 12 und Fig. 13 dargestellt. In einer Testschaltung wurden Spulen mit gleichen Windungszahlen (je 20), gleichem Durchmesser (120mm) und gleichen Sendeströmen verwendet. Fig. 12 zeigt die Spulenanordnung nach dem klassischen "Doppel-D" Prinzip, Fig. 13 die neue Spulenanordnung mit Mäanderspule.

Über beide Spulenanordnungen wurde ein Metallgegenstand (Cu, D=30 mm x 5 mm) in einem Abstand von 100 mm in der Richtung "A" und "B" bewegt und die dabei auftretenden Ausgangsspannungen 12.1 gemessen. Der Spannungsverlauf ist auf der Wegstrecke 12.4 aufgetragen. In beiden Bewegungsrichtungen A und B entstehen unterschiedliche Kurven 12.2 und 12.3 der Ausgangsspannung 12.1. Der deutliche Unterschied zeigt, dass das Doppel-D Spulensystem in Fig. 12 keine rotationssymmetrische Empfindlichkeit aufweist. In Bewegungsrichtung A ergibt sich bei der Doppel-D Anordnung in Fig. 12 eine Polaritätsumkehr. Bezeichnenderweise tritt sie im Nahbereich der Spule, also in einem Abstand zur Spule von z.B. weniger als einem Viertel des Spulendurchmessers besonders stark auf, und kann in induktiven Messsystemen durchaus zu Messfehlern führen.

Vollständig anders verhält sich das Spulensystem in Fig. 13. Zunächst zeigt es eine deutlich höhere Empfindlichkeit. Außerdem sind beide Kurven 13.1 der Ausgangsspannung in beiden Bewegungsrichtungen A und B deckungsgleich. Das Spulensystem besitzt also eine nahezu rotationssymmetrische Empfindlichkeit. "Nahezu" bedeutet: je mehr mäandernde Schleifenabschnitte auf dem Spulenumfang angeordnet sind, desto rotationssymmetrischer ist die Empfindlichkeit. In der Praxis haben sich z.B. 6-8 mäandernden Schleifenabschnitte für eine vollständig ausreichende Rotationssymmetrie bewährt. Die Nahfeldeffekte wie bei der Doppel-D Anordnung treten nicht auf.

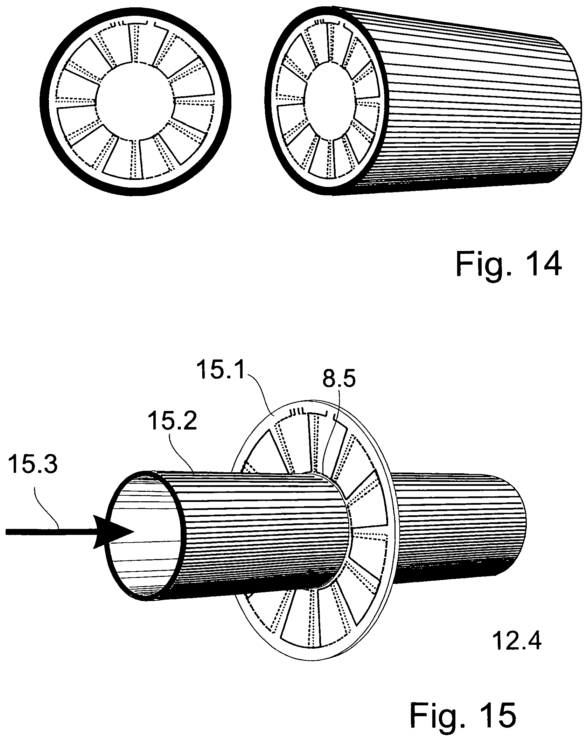

Des Weiteren zeigt das Mäanderspulensystem im Außenbereich eine größere Unempfindlichkeit, was z.B. ein Vorteil ist, wenn das Spulensystem in einem rohrförmigen metallischen Gehäuse untergebracht wird, wie dies bei Annäherungssensoren für die Automatisierungstechnik üblich ist. In dieser Anordnung, die Fig. 14 zeigt, kann durch geeignete Wahl des Spulenwinkels 8.3 die metallische Umgebung des Spulensystems ausgeblendet werden. Als geeignete Winkel haben sind Versatzwinkel im Bereich von ±2° in der Praxis bewährt.

Ein weiterer wesentlicher Vorteil zeigt Fig. 15. Im Spulensystem 15.1 ergibt sich die Möglichkeit einer relativ großen Öffnung 8.5. So kann eine nicht metallische oder wenigstens dünnwandige metallische Rohrleitung oder dergleichen durch die Spulenanordnung geführt werden. Auf diese Weise können z.B. metallische Abriebpartikel in einer fließenden Flüssigkeit 15.3, z.B. in Hydrauliköl mit hoher Empfindlichkeit detektiert werden.

Die Spulen 5.1, 7.1 können für sich entsprechend aufgebaut werden und dem Sensor zur Herstellung zugeführt werden.

### Bezugszeichenliste

- 1.1: Empfangsspule
- 1.2: Sendespule
- 1.3: Feldlinienverlauf
- 1.4: symbolische Darstellung der Feldlinien im Spulenquerschnitt
- 2.1: auf den Betrachter zulaufende Feldlinien
- 2.2: vom Betrachter weglaufende Feldlinien
- 3.1: gerader Strom durchflossener Leiter
- 4.1: mäanderförmiger Strom durchflossener Leiter
- 4.2: Spulenabschnitt mit einer Halbwindung
- 5.1: Sendespule
- 5.2: Schleifenabschnitt
- 5.3, 5.4: Abschnitte (kreisförmig)
- 5.5: radiale Abschnitte
- 5.7: weitere Sendespule
- 7.1: mäanderförmige Empfangsspule
- 7.2: Schleifenabschnitt
- 7.6: Innerer Bereich von 7.1
- 8.1: Tiefe der Schleifenabschnitte
- 8.2: Winkelbereich
- 8.3: Spulenwinkel
- 8.4: überlappender Bereich
- 8.5: Öffnung
- 9.1: Spannungskurve bei zu kleiner Tiefe der Mäander
- 9.2: Spannungskurve bei Auslöschung
- 9.3: Spannungskurve bei zu großer Tiefe der Mäander
- 9.4: Position
- 9.5: Spannung an der Empfangsspule
- 9.6: Winkelgrad der Verdrehung
- 9.7: "Null"-Wert
- 10.1: Taktphase
- 10.4: Winkelversatz "vor" Winkel 8.3
- 10.5: Winkelversatz "nach" Winkel 8.3
- 10.6: Ausgangsspannung
- 11.1: Punkt der Auslöschung in der Empfangsspule
- 12.1: Ausgangsspannung einer Testschaltung
- 12.2: Spannungsverlauf bei Bewegung in Richtung A
- 12.3: Spannungsverlauf bei Bewegung in Richtung B
- 13.1: deckungsgleiche Kurve der Bewegungsrichtung A und B
- 15.1: Spulensystem um Rohrleitung
- 15.2: Rohrleitung
- 15.3: fließende Flüssigkeit
- A: erste Bewegungsrichtung eines Metallgegenstandes
- B: zweite Bewegungsrichtung eines Metallgegenstandes

## Patentansprüche

1. Sensor zur Ortung metallischer Objekte mit Spulen bzw. Spulenteilen, die wenigstens zwei Sendespulen (5.1, 5.7) und wenigstens eine Empfangsspule (7.1) ausbilden, welche induktiv miteinander gekoppelt und zur Wechselwirkungsentkopplung teilweise überlappend angeordnet sind, wobei eine optimale Auslöschung der Wechselwirkung erreichbar ist, sowie mit einer Sensorelektronik zur Bestromung der Sendespulen unter Regelung der Amplitude des den Sendespulen zugeführten Stroms und zur Auswertung eines Empfangssignals (10.6) der Empfangsspule, wobei Sendespulen (5.1, 5.7) und Empfangsspule (7.1) im Wesentlichen eine identische ebene Spulenform aufweisen und zueinander verdreht und/oder versetzt angeordnet sind, wobei sich mehrere symmetrisch angeordnete, überlappende Bereiche (8.4) ausbilden, **dadurch gekennzeichnet, dass** die Spulenform entlang des Umfangs der ebenen Spule bzw. Spulenteile angeordnete, mäandernde Schleifenabschnitte (5.2, 7.2) aufweist, die jeweils Teil einer Windung der Spule bzw. des Spulenabschnittes sind und Abschnitte (5.3, 5.4) aufweisen, die mit unterschiedlichem radialen Abstand zum Mittelpunkt der Spule angeordnet sind und unter Bildung eines elektrischen Leiters über Abschnitte (5.5) abwechselnd miteinander verbunden sind.

2. Sensor nach Anspruch 1, **dadurch gekennzeichnet, dass** die überlappenden Bereiche (8.4) punktsymmetrisch zur Mitte der Spulen angeordnet sind.

3. Sensor nach Anspruch 1, **dadurch gekennzeichnet, dass** die Spule kreisförmig ist und n Schleifenabschnitte (5.2, 7.2) aufweist, wobei die Schleifenabschnitte von Sendespule (5.1, 5.7) und Empfangsspule (7.1) um einen Winkel von etwa 360°/ (n ^{∗} 2) verdreht angeordnet sind.

4. Sensor nach Anspruch 1 oder 3, **dadurch gekennzeichnet, dass** die Spule kreisförmig ist und dass die Schleifenabschnitte (5.2, 7.2) kreisförmige Abschnitte (5.3, 5.4) aufweisen, die unter Bildung des elektrischen Leiters über radial angeordnete Abschnitte (5.5) abwechselnd miteinander verbunden sind.

5. Sensor nach Anspruch 3 oder 4, **dadurch gekennzeichnet, dass** sich innerhalb der nach innen offenen Schleifenabschnitte (7.2) der Empfangsspule (7.1) Feldlinien eines zu den von der Bestromung der Sendespule (5.1, 5.7) hervorgerufenen Feldlinien invertierten Felds ausbilden, während sich im Innern (7.6) der Empfangsspule ein mit den Feldlinien der Sendespule (5.1, 5.7) gleichsinniges Feld ausbildet.

6. Sensor nach einem der vorhergehenden Ansprüche, **dadurch gekennzeichnet, dass** der Umfang der Sendespulen (5.1, 5.7) etwa nahezu kongruent zum Umfang der Empfangspule (7.1) ist.

7. Sensor nach einem der vorhergehenden Ansprüche, **dadurch gekennzeichnet, dass** ein Komparator zum Vergleich der den Sendespulen (5.1, 5.7) zugeordneten Stromsignale zur Ermittlung eines Regelwertes vorgesehen ist, und dass wenigstens eine geregelte Stromquelle vorgesehen ist, in der der Regelwert zur Regelung der Amplitude des den Sendespulen zugeführten Stroms die Amplitude vorzugsweise kontinuierlich so regelt, dass die Amplituden der Spannungssignale an den Eingängen des Komparators gleich groß sind oder dass aus beiden Taktabschnitten eines Taktzyklus keine Differenz der Spannungssignale an den Eingängen des Komparators besteht.

## Claims

1. A sensor for locating metal objects, comprising coils or coil parts that form at least two transmitting coils (5.1, 5.7) and at least one receiving coil (7.1), which are inductively coupled to one another and are arranged to partly overlap for the purpose of decoupling interaction, wherein an optimal cancellation of the interaction may be achieved,
and comprising a sensor electronics for supplying current to the transmitting coils while controlling the amplitude of the current supplied to the transmitting coils and for evaluating a received signal (10.6) from the receiving coil,
wherein transmitting coils (5.1, 5.7) and receiving coil (7.1) essentially have an identical flat coil shape and are arranged twisted and/or offset with respect to one another, wherein a plurality of symmetrically arranged upper-lap regions (8.4) are formed,
**characterized in that** the coil shape comprises meandering loop portions (5.2, 7.2) disposed along the periphery of the planar coil or coil parts, each loop portion being part of a winding of the coil or coil parts and comprising portions (5.3, 5.4) disposed at different radial spacings from the center of the coil and alternately connected to each other via portions (5.5)to form an electrical conductor

2. A sensor according to Claim 1, **characterized in that** the overlap regions (8.4) are arranged to have point symmetry in relation to the centre of the coils.

3. A sensor according to Claim 1, **characterized in that** the coil is circular and comprises n loop portions (5.2, 7.2), wherein the loop portions of the transmitting coil (5.1) and the receiving coil (7.1) are arranged rotated about an angle of approximately 360°/(n^{∗}2).

4. A sensor according to Claim 1 or 3, **characterized in that** the coil is circular and **in that** the loop portions (5.2, 7.2) comprise circular portions (5.3, 5.4) which are connected alternately to one another, by way of radially arranged portions (5.5), to form an electrical conductor.

5. A sensor according to Claims 3 or 4, **characterized in that** field lines of a field that is inverted in relation to the field lines caused by the supply of current to the transmitting coil are formed within the inwardly open loop portions (7.2) of the receiving coil (7.1), while a field that acts in the same direction as the field lines of the transmitting coil is formed in the interior (7.6) of the receiving coil.

6. A sensor according to one of the preceding claims, **characterized in that** the periphery of the transmitting coils (5.1, 5.7) is approximately almost congruent with the periphery of the receiving coil (7.1).

7. A sensor according to one of the preceding claims, **characterized in that** a comparator for comparing the values of the transmission coils (5.1, 5.7) is provided for determining a control value, and **in that** at least one regulated current source is provided in which the control value for regulating the amplitude of the current supplied to the transmitting coils regulates the amplitude preferably continuously in such a way that the amplitudes of the voltage signals at the inputs of the comparator are of the same magnitude, or **in that** no difference in the voltage signals at the inputs of the comparator exists from two clock sections of a clock cycle.

## Revendications

1. Capteur pour localiser des objets métalliques comportant des bobines ou des composantes de bobines qui forment au moins deux bobines d'émission (5.1, 5.7) et au moins une bobine de réception (7.1) qui sont couplées les unes aux autres de manière inductive et sont disposées de façon partiellement superposée en vue d'un découplage d'interaction, une annulation optimale de l'interaction pouvant être obtenue,
ainsi qu'une électronique de capteur pour alimenter les bobines d'émission en réglant l'amplitude du courant fourni aux bobines d'émission et pour le traitement d'un signal de réception (10.6) de la bobine de réception,
dans lequel les bobines d'émission (5.1, 5.7) et la bobine de réception (7.1) se présentent sensiblement dans le même plan et sont tournées l'une vers l'autre et/ou décalées, plusieurs zones superposées (8.4) disposées symétriquement se formant,
**caractérisé en ce que** la forme de la bobine présente, le long de la périphérie de la bobine plane ou des composantes de bobine planes, des tronçons en boucle (5.2, 7.2) formant des méandres, qui sont respectivement une partie d'un enroulement de la bobine ou des sections de bobine et présentent des sections (5.3, 5.4) qui sont disposées à une distance radialement différente par rapport au centre de la bobine et sont reliées ensemble alternativement au moyen de sections (5.5) en formant un conducteur électrique.

2. Capteur selon la revendication 1, **caractérisé en ce que** les zones superposées (8.4) sont disposées avec une symétrie ponctuelle par rapport au centre des bobines.

3. Capteur selon la revendication 1, **caractérisé en ce que** la bobine est circulaire et présente n tronçons en boucle (5.2, 7.2), les sections en boucle étant disposées en étant tournées d'un angle d'environ 360°/(n^{∗}2) par rapport aux bobines d'émission (5.1, 5.7) et à la bobine de réception (7.1)

4. Capteur selon la revendication 1 ou 3, **caractérisé en ce que** la bobine est circulaire et **en ce que** les tronçons en boucle (5.2, 7.2) présentent des sections circulaires (5.3, 5.4) qui sont reliées ensemble alternativement en formant le conducteur électrique au moyen de sections (5.5) disposées radialement.

5. Capteur selon la revendication 2, **caractérisé en ce que**, à l'intérieur des tronçons en boucle (7.2) de la bobine de réception (7.1) ouverte vers l'intérieur, des lignes de champ forment un champ inversé par rapport aux lignes de champ provoquées par l'alimentation de la bobine d'émission (5.1, 5.7), tandis qu'à l'intérieur (7.6) de la bobine de réception il se forme un champ de même sens que les lignes de champ de la bobine d'émission (5.1, 5.7).

6. Capteur selon l'une des revendications précédentes, **caractérisé en ce que** la périphérie des bobines d'émission (5.1, 5.7) est à peu près en correspondance avec la périphérie de la bobine de réception (7.1).

7. Capteur selon l'une des revendications précédentes, **caractérisé en ce qu'**un comparateur est prévu pour comparer les signaux de courant associés aux bobines d'émission (5.1, 5.7) pour l'obtention d'une valeur de réglage et **en ce qu'**au moins une source de courant régulé est prévue, la valeur de réglage pour le réglage de l'amplitude du courant fourni aux bobines d'émission réglant de préférence continuellement l'amplitude de telle sorte que les amplitudes des signaux de tension soient de la même valeur aux entrées du comparateur ou qu'il n'y ait aucune différence aux entrées du comparateur entre les signaux de tension provenant des deux sections de cadence d'un cycle de cadence.
